# EUROPÄISCHE PATENTANMELDUNG

(11) **EP 1 016 874 A2**
(43) Veröffentlichungstag der Anmeldung: **05.07.2000**
(21) Anmeldenummer: 99122639.0
(22) Anmeldetag: 13.11.1999
(51) Int. Cl.: G01S 7/483, G01S 17/10

(54) **Laserentfernungsmessgerät für grosse Messbereiche**

(30) Priorität: 28.12.1998 DE 19860464
(71) Anmelder: JENOPTIK Aktiengesellschaft, 07743 Jena (DE)
(72) Erfinder: Seifert, Helmut, 07616 Serba (DE); Penzold, Martin, 07745 Jena (DE); Krüger, Ullrich, 07751 Milda (DE); Schusser, Gero, 07616 Bürgel (DE)

(57) **Zusammenfassung**

Laserentfernungsmeßgerät für große Meßbereiche mit einem zueinander parallel angeordneten Sende- und Empfangskanal, wobei
das Empfangsobjektiv eine modifizierte Einzellinse (4) ist bestehend aus einem primären Linsenbereich (5) mit einer primären optischen Empfangsachse (7), die parallel zur optischen Sendeachse (8) ausgerichtet ist, sowie einem sekundären Linsenbereich (6) mit einer sekundären optischen Empfangsachse (10), die zur primären optischen Empfangsachse um einen Winkel α geneigt ist, so daß ein primärer Brennpunkt (9) und ein sekundärer Brennpunkt (11) entstehen.

## Beschreibung

Laserentfernungsmeßgeräte basieren auf dem Prinzip der Impulslaufzeitmessung oder der Phasenlaufzeitmessung.

Das Phasenlaufzeitverfahren wird heute ausschließlich mit sichtbaren Halbleiterlasern betrieben. Hier ist es möglich, den Meßlaser und den Ziellaser mit einem preiswerten Halbleiterlaser in Gesamtfunktion zu realisieren.

Der Nachteil des Phasenlaufzeitverfahrens sind die extrem kleinen Empfangssignale und durch die zeitlich parallele Arbeit des Sendesystems und des Empfangssystems wird ein leistungsfähiges Empfangssystem mit extrem kleinen Übersprechen, Sendesystem zum Empfangssystem, benötigt.

Die aus dem Stand der Technik bekannten Entfernungsmeßvorrichtungen auf der Basis der Lichtlaufzeitmessung können in ihrer grundsätzlichen Anordnung von Sende- und Empfangskanal unterschieden werden, in Vorrichtungen, bei denen der Sendekanal neben dem Empfangskanal angeordnet ist, d. h. die optischen Achsen verlaufen zueinander parallel in einem bestimmten Abstand und in Vorrichtungen, bei denen Sende- und Empfangskanal zueinander koaxial angeordnet sind, d. h. ihre optischen Achsen fallen zusammen.

Das optische Übersprechen z. B. durch Rückstreuung von Staubpartikeln im Nahbereich ist optisch nur durch zwei Maßnahmen reduzierbar; die Verkleinerung der Empfängerfläche und der Achsenabstand von Sender und Empfänger wird vergrößert.
Dies bewirkt aber im Entfernungsbereich ein schnelles Auswandern des Empfangsbündels vom Empfänger.
Für Entfernungen im Nahbereich werden Anordnungen mit koaxialem Sende- und Empfangskanal verwendet, d.h. das Sendeobjektiv, was auch eine Einzellinse sein kann, stellt auch das Empfangsobjektiv dar. Innerhalb der Brennweite dieses Objektives befindet sich ein Strahlteiler, wodurch die Brennebene des Objektives in zwei zueinander konjugierten Ebenen entsteht. In diesen Brennebenen befindet sich zum einen der Sender und zum anderen der Empfänger, so daß die vom Sender ausgehende Meßstrahlung, durch das Objektiv kollimiert, vom Objekt reflektiert und unabhängig von der Objektentfernung immer auf dem Empfänger abgebildet wird.

Diese Anordnung ist für den Nahbereich geeignet da aufgrund der relativ hohen Intensität der vom Objekt auf den Empfänger reflektierten Meßstrahlung
- der Öffnungswinkel des Objektives, optimiert für die Aussendung des Meßstrahlenbündels, für den Empfang der reflektierten Meßstrahlung ausreichend ist
- der Dynamikbereich des Empfängers so eingestellt ist, daß eine Reflexion der Meßstrahlung an Staubpartikeln nicht detektiert wird und
- ein Intensitätsverlust durch den Strahlteiler unproblematisch ist.

Diese Anordnung ist für den Fernbereich aufgrund der geringen Intensität der reflektierten Meßstrahlung und der relativ hohen Intensität aus dem Nahbereich, verursacht durch die optischen Bauelemente (Strahlteiler, Objektiv) und der Staubpartikel ungeeignet.

Für den Fernbereich, d.h. das anzumessende Objekt befindet sich in einer für das Empfangsobjektiv, was auch eine Einzellinse sein kann, unendlichen Entfernung, wählt man die Parallelanordnung von Sende- und Empfangskanal. Da der auf dem anzumessenden Objekt erzeugte Meßfleck immer aus dem Unendlichen kommend im Fokus des Empfangsobjektives abgebildet wird, kann man darauf verzichten, Sender und Empfänger in zueinander konjugierten Ebenen anzuordnen, was die Trennung von Sende- und Empfangskanal erlaubt.

Diese Anordnung ist für den Fernbereich geeignet, da aufgrund der relativ geringen Intensität der vom Objekt auf den Empfänger reflektierten Meßstrahlung
- der Öffnungswinkel des Empfangsobjektives größer gewählt werden muß, als der Öffnungswinkel des Sendeobjektives
- der Dynamikbereich des Empfängers so eingestellt ist daß eine Reflexion der Meßstrahlung an Staubpartikeln detektiert werden würde, wenn diese Strahlungsanteile auf den Empfänger treffen. Dies wird vermieden durch den Abstand der optischen Achsen von Sende- und Empfangskanal und durch eine kleine Empfängerfläche und
- kein zusätzlicher Intensitätsverlust durch einen Strahlteiler entsteht.

Diese Anordnung ist für den Nahbereich aufgrund der entstehenden Paralaxe ungeeignet, die dazu führt, daß die Abbildung des Meßfleckes mit kürzer werdender Entfernung zunehmend von dem auf der optischen Achse des Empfangsobjektives angeordneten Empfänger wegwandert.

Obige Ausführungen zusammengefaßt lassen es schwierig erscheinen, ein Laserentfernungsmeßgerät zu konzipieren, welches für einen großen Entfernungsbereich geeignet ist. Unter einem großen Entfernungsbereich soll ein Bereich verstanden werden, der sowohl den Nah- als auch den Fernbereich umfaßt.

Der Bedarf nach solchen Entfernungsmeßgeräten besteht z.B. in der Baubranche, wo ein Entfernungsbereich von 0,3 bis 30 m von Interesse ist.

Für einen großen Entfernungsmeßbereich kommt aufgrund der Intensitätsminderung bei der koaxialen Anordnung eine Anordnung mit parallelem Sende- und Empfangskanal zum Ansatz.
Eine solche Anordnung ist in der EP 0 701 702 B1 offenbart.
Bei dem hier beschriebenen Laserentfernungsmeßgerät werden zwei grundsätzlich unterschiedliche Lösungen angeboten, damit die Abbildung des Meßfleckes auch im Nahbereich stets auf dem Empfänger, hier Lichtleitereintrittsfläche erfolgt.

Dies kann einerseits durch die Nachführung der Lichtleitereintrittsfläche entsprechend der Verlagerung der Abbildungsposition des Meßfleckes und zwar nur quer zur optischen Achse erfolgen. Wie im Patent angegeben, erfolgt bewußt keine Nachführung längs der optischen Achse, da sich herausgestellt hat, daß eine Nachführung in die konkrete Abbildungsposition zu einer Übersteuerung der Auswerteelektronik führt, d.h. der Dynamikbereich des Empfängers, für den die Steuerelektronik konzipiert ist, wird überschritten.

Andererseits wird vorgeschlagen, die Lichtleitereintrittsfläche feststehend anzuordnen und durch außerhalb der optischen Achse angeordnete optische Umlenkmittel dafür zu sorgen, daß die bei kurzen Objektentfernungen zunehmend schräger in das Empfangsobjektiv einfallenden Meßstrahlen zur Lichtleitereintrittsfläche gelenkt werden. Man geht auch hier davon aus, daß es auf eine abbildungsoptisch korrekte Umlenkung nicht ankommt, da Intensitätsprobleme bei nahen Objektentfernungen nicht bestehen. Die zweitgenannte Variante hat den Vorteil, daß sie ohne mechanisch bewegliche Elemente im Empfangskanal auskommt.
Sie hat jedoch den Nachteil, daß eine Anpassung des Signalpegels (Intensität der auf den Empfänger auftreffenden vom Objekt reflektierten Meßstrahlung) an den Dynamikbereich des Empfängers kaum möglich ist.

Sofern durch geeignete Maßnahmen gesichert ist, daß ein Teil der am Objekt reflektierten Meßstrahlung auf die Empfängerfläche trifft, ist der Entfernungsmeßbereich begrenzt durch den Empfindlichkeitsbereich (Dynamik) des Empfängers.
Bestimmend für die auf die Empfängerfläche auftreffende Strahlungsintensität ist im wesentlichen:
- die Sendeleistung
- der Intensitätsverlust über die Länge des Strahlungsweges, gleich der doppelten Entfernung zum Objekt und
- der jeweils wirksame Aperturbereich, d.h. der Flächenanteil des Empfangsobjektives, welcher zur Abbildung der reflektierten Meßstrahlung jeweils auf dem Empfänger wirksam wird.

Aus dieser Tatsache heraus soll die Aufgabe der Erfindung darin bestehen, das Empfangsobjektiv so zu modifizieren, daß in Abhängigkeit von der Entfernung ein veränderter Aperturbereich wirksam wird, um die auf die Empfängerfläche auftreffende Strahlungsintensität so zu beeinflussen, daß es zu keiner Übersteuerung kommt.

Erfindungsgemäß wird diese Aufgabe von einem Laserentfernungsmeßgerät mit den Merkmalen nach Anspruch 1 gelöst. Vorteilhafte Ausführungen sind in den Unteransprüchen beschrieben.
Wesentlich an dieser Lösung ist, daß das Empfangsobjektiv eine modifizierte Empfangslinse mit zwei bildseitigen Brennpunkten ist. Diese zwei Brennpunkte entstehen dadurch, daß die Empfangslinse aus einem primären Linsenbereich und einem sekundären Linsenbereich besteht, wobei der sekundäre Linsenbereich über den gesamten Durchmesser der Empfangslinse gestreckt in senkrechter Richtung zur Sendeachse verläuft und eine trapezförmige Form aufweist, die zur Sendeachse hin schmaler wird.
Die beiden Linsenbereiche sind so dimensioniert, daß über den gesamten gewünschten Entfernungsbereich vom Empfänger ein innerhalb seines Empfindlichkeitsbereiches liegendes Reflexsignal empfangen wird.
Das modifizierte Empfangselement gestattet einen einfachen Aufbau, mit einem relativ geringen Montage- und Justageaufwand.

Die Erfindung soll nachfolgend anhand von Ausführungsbeispielen näher erläutert werden. Dazu zeigen in den Zeichnungen
- Fig. 1: den Strahlenverlauf im Sendekanal
- Fig. 2.1: den Strahlenverlauf im Empfangskanal über den primären Linsenbereich 5 bei einem Objekt in der Entfernung E∞
- Fig. 2.2: den Strahlenverlauf im Empfangskanal über den sekundären Linsenbereich 6 bei einem Objekt in der Entfernung E∞
- Fig. 3.1: den Strahlenverlauf im Empfangskanal über den primären Linsenbereich 5 bei einem Objekt in einer Entfernung E₃
- Fig. 3.2: den Strahlenverlauf im Empfangskanal über den sekundären Linsenbereich 6 bei einem Objekt in einer Entfernung E₃
- Fig. 4: den Strahlenverlauf im Empfangskanal über den sekundären Linsenbereich 6 bei einem Objekt in einer Entfernung E₂ < E₃
- Fig. 5: den Strahlenverlauf im Empfangskanal über den sekundären Linsenbereich 6 bei einem Objekt in einer Entfernung E₁ < E₂
- Fig. 6: die wirksamen Aperturbereiche über der modifizierten Empfangslinse 4 bei einem Objekt in den Entfernungen E∞ und E₃
- Fig. 7: die wirksamen Aperturbereiche über der modifizierten Empfangslinse 4 bei einem Objekt in den Entfernungen E₂ und E₁
- Fig. 8: eine modifizierte Empfangslinse 4 aus zwei bikonvexen Linsenteilen
- Fig. 9: eine modifizierte Empfangslinse 4 aus zwei plankonvexen Linsenteilen
- Fig. 10: eine modifizierte Empfangslinse 4 als Plankonvexlinse mit planseitiger keilförmiger Erhebung im sekundären Linsenbereich 6
- Fig. 11: eine modifizierte Empfangslinse 4 als Plankonvexlinse mit planseitiger keilförmiger Aussparung im sekundären Linsenbereich 6

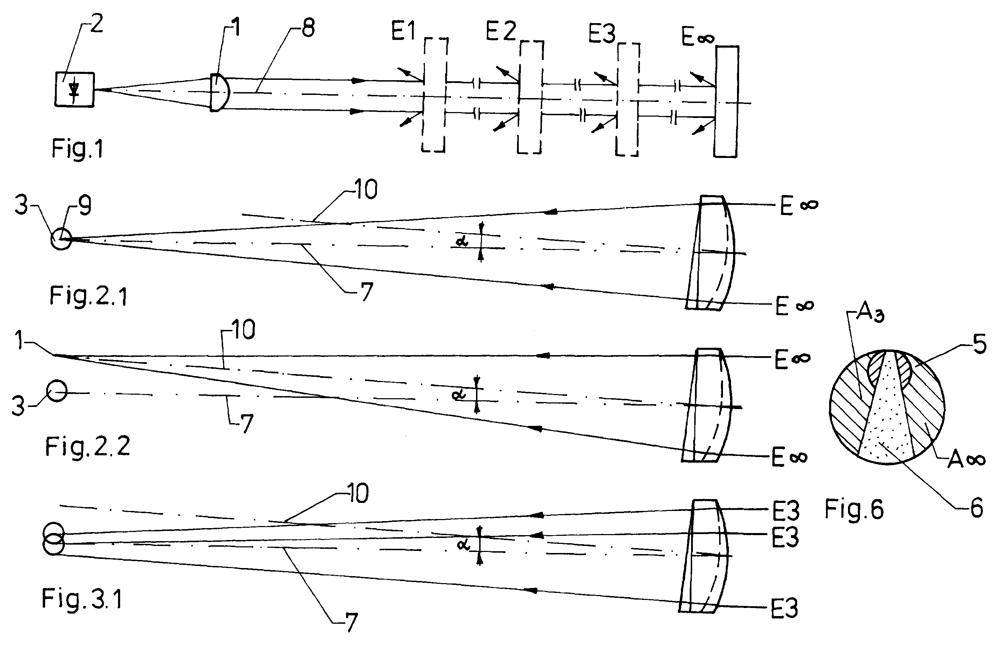

Das Laserentfernungsmeßgerät besteht aus einem Sendekanal mit einem Sendeobjektiv 1 und einer Laserlichtquelle 2 (Fig. 1), welche im Brennpunkt des Sendeobjektives 1 angeordnet ist. Das von der Laserlichtquelle 2 emittierende Strahlenbündel wird über das Sendeobjektiv 1 kollimiert und erzeugt auf dem anzumessenden Objekt (welches zur Erläuterung der Wirkungsweise beispielhaft in verschiedenen Entfernungen E_{∞} > E₃ > E₂ > E₁ dargestellt ist) einen Meßfleck.

Parallel zum Sendekanal ist ein Empfangskanal angeordnet (z.B. Fig. 2.1), mit einem Empfänger 3 und einer das Empfangsobjektiv darstellenden modifizierten Empfangslinse 4 mit zwei in einer Ebene befindlichen Brennpunkten. Die modifizierte Empfangslinse 4 besteht aus einem primären Linsenbereich 5 mit dem primären Brennpunkt 9 und einem sekundären Linsenbereich 6 mit einem sekundären Brennpunkt 11.
Der primäre Linsenbereich 5 ist bestimmend für die primäre optische Empfangsachse 7, welche parallel zur Sendeachse 8, definiert durch das Sendeobjektiv 1, verläuft. Über diesen Bereich wird die an entfernten Objekten reflektierte Strahlung abgebildet. Der Empfänger 3 ist vorteilhafterweise nicht exakt im primären Brennpunkt 9 angeordnet sondern befindet sich aus diesem heraus soweit zu der Sendeachse 8 abgerückt, daß der Meßfleck, aus E∞ kommend, gerade noch vollständig auf dem Empfänger 4 abgebildet wird (Fig. 2.1).
Der sekundäre Linsenbereich 6 bestimmt die Lage der sekundären optischen Empfangsachse 10, die gegenüber der primären optischen Empfangsachse 7 um den Winkel α geneigt ist. Über den sekundären Linsenbereich 6 wird die an Objekten im Nahbereich reflektierte Strahlung abgebildet. Der sekundäre Linsenbereich 6 ist ein gleichschenklig trapezförmiges Kreissegment, an dessen Längsseite der primäre Linsenbereich 5, bestehend aus zwei kreisabschnittsförmigen Linsenstücken, anschließt. Der Querschnitt der Linsenteile, der für alle erfindungsgemäßen Ausführungsformen gleich ist, ist aus Fig. 6 ersichtlich.
Die trapezförmige Form des sekundären Linsenbereiches 6 und die Anordnung der modifizierten Empfangslinse 4 bewirkt, daß der wirksame Aperturbereich kleiner wird je näher das angemessen Objekt steht. Die Symmetrieachse des sekundären Linsenbereiches 6 liegt in einer von der Sendeachse 8 und der primären optischen Empfangsachse 7 aufgespannten Ebene. Die trapezförmige Form wird zur Sendeachse 8 hin schmaler.

Die Wirkungsweise des primären und sekundären Linsenbereiches 5, 6 soll nachfolgend beispielhaft für verschiedene Entfernungen (Fig. 1) erläutert werden.

E_{∞} Für je Objektentfernung E_{∞} wird das Strahlenbündel über den primären Linsenbereich 5 in den primären Brennpunkt 9 abgebildet (Fig.1.2). Da der Durchmesser der Abbildung kleiner ist, als die Empfängerfläche des Empfängers 3, ist der Empfänger in der Brennebene von der Sendeachse 8 weg verschoben, so daß die abgebildete Strahlung gerade noch vollständig im Randbereich des Empfängers 3 auftrifft. Bei einem Objekt in der Entfernung E_{∞} wird die gesamte Fläche des primären Linsenbereiches 5 als Aperturbereich wirksam (A_{∞}).
In Fig. 2.2 ist das über den sekundären Linsenbereich 6 in den sekundären Brennpunkt 11 abgebildete Strahlenbündel dargestellt. Die Abbildung erfolgt neben dem Empfänger zur Sendeachse hin versetzt.

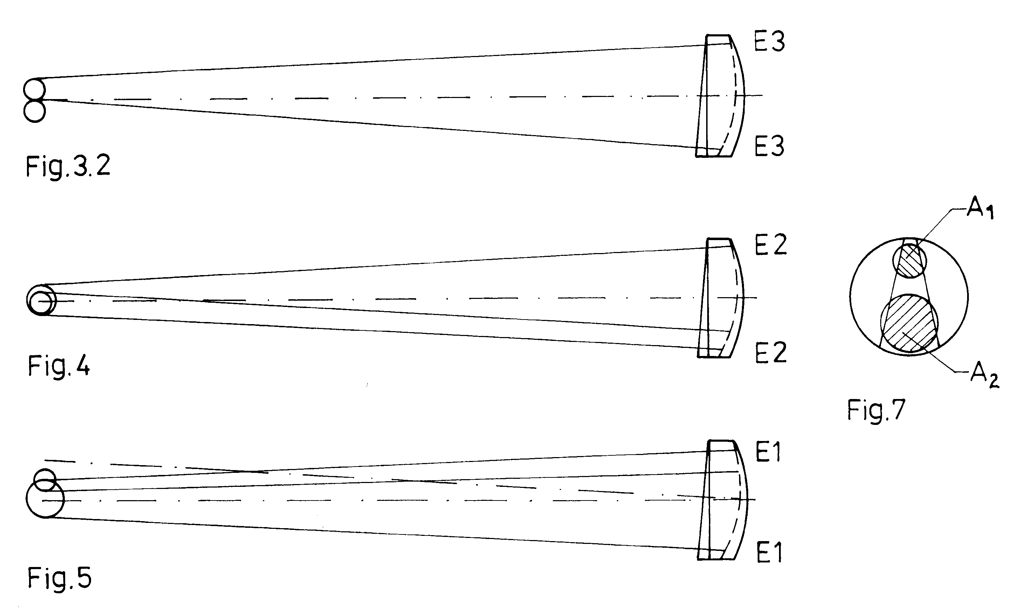

E₃ In den Fig. 3.1 und 3.2 ist die Abbildung des Strahlenbündels dargestellt für ein Objekt in der Entfernung E₃. Fig. 3.1 zeigt die Abbildung über den primären Linsenbereich 5. Nur noch ein Teil der Abbildung trifft auf den Empfänger. Der zugehörige wirksame Aperturbereich ist in Fig.6 als Fläche A₃ gekennzeichnet. Die Abbildung über den sekundären Linsenbereich 6 wird auch bei dieser Entfernung wie in Fig. 3. 2 ersichtlich noch nicht wirksam.

E₂ Bei dem in Fig.4 dargestellten Strahlenverlauf befindet sich das angemessene Objekt in einer Entfernung E₂, die über den primären Linsenbereich 5 nicht mehr erfaßbar ist, d.h. die reflektierte Strahlung, welche über den primären Linsenbereich 5 abgebildet wird, trifft nicht mehr auf den Empfänger. Statt dessen trifft die Strahlung, welche über den sekundären Linsenbereich abgebildet wird auf den Empfänger. Der hierbei wirksame Aperturbereich ist in Fig. 7 als Fläche A₂ dargestellt.

E₁ Da bekanntlich mit geringer werdender Entfernung das reflektierte Strahlenbündel auf Grund der Paralaxe zwischen Sende- und Empfangskanal unter einem größer werden Winkel in den Empfangskanal eintritt, entfernt sich die Abbildung zunehmend von der optischen Achse. Sie 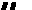 überstreift" dabei den Empfänger (vergleiche Fig. 4 und 5). Für die Entfernung E₁ wird beispielsweise ein Aperturbereich wirksam wie er als Fläche A₁ in Fig. 7 dargestellt ist.
Ein Größenvergleich der beispielhaft dargestellten jeweils wirksamen Aperturbereiche zeigt, daß diese mit geringer werdender Entfernung kleiner werden.

Die Abhängigkeit des wirksamen Aperturbereiches von der Entfernung kann durch konkrete Ausführung der modifizierten Empfangslinse 4 und die Dimensionierung der Linsenbereiche zueinander beeinflußt werden.

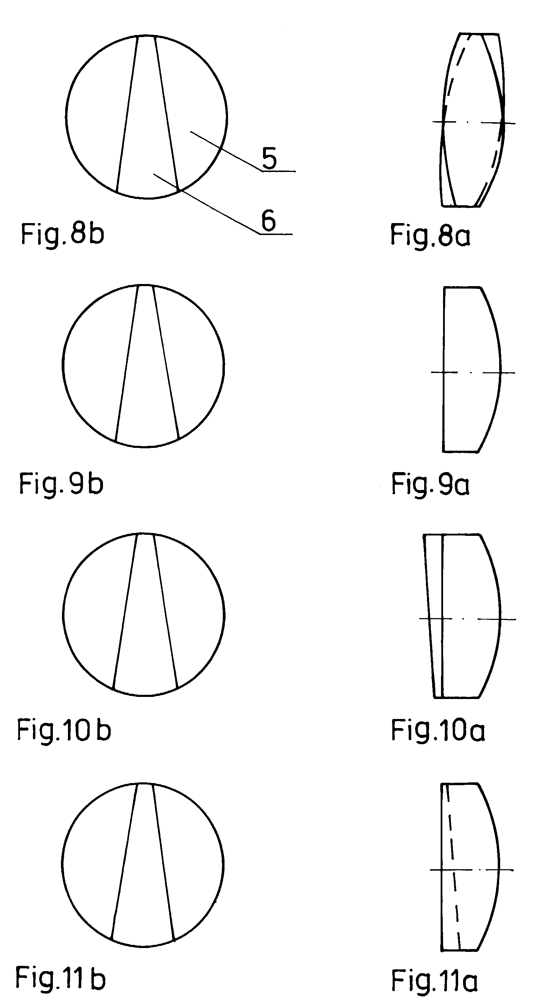

In den Fig. 2.1 bis 5 ist ein erstes Beispiel für die konstruktive Ausführung der modifizierten Empfangslinse dargestellt. Ausgehend von einer einfachen Plankonvexlinse ist hier über die gesamte Länge des Durchmessers ein gleichschenklig trapezförmiger Bereich gegenüber den angrenzenden Kreissegmenten um einen Winkel α gekippt. Der gekippte Linsenteil stellt den sekundären Linsenbereich 6, der andere Teil den primären Linsenbereich 5 dar.
Weitere Bauformen sind in den Figuren 8 bis 11 dargestellt.
In Fig. 8 sind der primäre und der sekundäre Linsenbereich 5, 6 zueinander verkippte bikonvexe Linsenteile.
Fig. 9 zeigt eine modifizierte Empfangslinse 4 die einerseits eine durchgehende Planfläche und andererseits zwei zueinander verkippte konvexe Flächen aufweist. In den Fig. 10 und 11 weist die modifizierte Empfangslinse 4 jeweils eine durchgehende konvexe Oberfläche auf und eine Planfläche, wobei die Planfläche nicht durchgehend ist, sondern im sekundären Linsenbereich 6 gegenüber dem primären Linsenbereich 5 geneigt ist. Der geneigte Flächenbereich kann entweder durch eine Erhebung (Fig. 10) oder eine Aussparung (Fig. 11) realisiert sein.
Die Wirkungsweise der einzelnen Bauformen ist im wesentlichen gleich. Die Herstellung kann aus einem Stück oder als Kittgruppe erfolgen.
- 1: Sendeobjektiv
- 2: Laserlichtquelle
- 3: Empfänger
- 4: modifizierte Empfangslinse
- 5: primärer Linsenbereich
- 6: sekundärer Linsenbereich
- 7: primäre optische Empfangsachse
- 8: optische Sendeachse
- 9: primärer Brennpunkt
- 10: sekundäre optische Empfangsachse
- 11: sekundärer Brennpunkt

## Patentansprüche

1. Laserentfernungsmeßgerät für große Meßbereiche mit einem zueinander parallel angeordneten Sende- und Empfangskanal, wobei der Sendekanal aus einem Sendeobjektiv (1), mit einer optischen Sendeachse (8), besteht, in dessen Brennpunkt (9) eine Laserlichtquelle (2) angeordnet ist und der Empfangskanal aus einem Empfangsobjektiv besteht, in dessen Brennebene ein Empfänger (3) angeordnet ist, dadurch gekennzeichnet,
daß das Empfangsobjektiv eine modifizierte Einzellinse (4) ist, bestehend aus einem primären Linsenbereich (5) mit einer primären optischen Empfangsachse (7), die parallel zur optischen Sendeachse (8) ausgerichtet ist, sowie einem sekundären Linsenbereich (6) mit einer sekundären optischen Empfangsachse (10), die zur primären optischen Empfangsachse um einen Winkel α geneigt ist, so daß ein primärer Brennpunkt (9) und ein sekundärer Brennpunkt (11) entstehen und
daß der sekundäre Linsenbereich (6) eine gleichschenklige trapezförmige Form aufweist, die spiegelsymmetrisch zu einer von den optischen Achsen aufgespannten Ebene verläuft und in Richtung zur optischen Sendeachse (8) hin schmaler wird.

2. Laserentfernungsmeßgerät für große Meßbereiche nach Anspruch 1, dadurch gekennzeichnet,
daß der primäre und der sekundäre Linsenbereich (5), (6) zwei zueinander um den Winkel α gekippte bikonvexe Linsenteile sind.

3. Laserentfernungsmeßgerät für große Meßbereiche nach Anspruch 1, dadurch gekennzeichnet,
daß der primäre und der sekundäre Linsenbereich (5) (6) zwei zueinander um den Winkel α gekippte plankonvexe Linsenteile sind.

4. Laserentfernungsmeßgerät für große Meßbereiche nach Anspruch 1, dadurch gekennzeichnet,
daß die modifizierte Empfangslinse (4) eine Plankonvexlinse ist, wobei die Planfläche im sekundären Linsenbereich (6) gegenüber der Planfläche im primären Linsenbereich (5) um den Winkel α geneigt ist.

5. Laserentfernungsmeßgerät für große Meßbereiche nach Anspruch 4, dadurch gekennzeichnet,
daß der sekundäre Linsenbereich (6) eine Erhebung darstellt.

6. Laserentfernungsmeßgerät für große Meßbereiche nach Anspruch 4, dadurch gekennzeichnet,
daß der sekundäre Linsenbereich (6) eine Aussparung darstellt.

7. Laserentfernungsmeßgerät für große Meßbereiche nach einem der Ansprüche 1 bis 6, dadurch gekennzeichnet,
daß der Empfänger (3) soweit aus dem primären Brennpunkt (9) in Richtung zur optischen Sendeachse (8) hin versetzt angeordnet ist, daß die vom weitest entfernten Objektiv reflektierte Strahlung, welche über den primären Linsenbereich (5) abgebildet wird, auf den Randbereich des Empfängers trifft.
